# EUROPEAN PATENT APPLICATION

(11) **EP 4 071 054 A1**
(43) Date of publication of application: **12.10.2022**
(21) Application number: 21275037.6
(22) Date of filing: 06.04.2021
(51) Int. Cl.: B64C 39/02

(54) **MOUNTING STRUCTURES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, a mounting structure comprises a first component to couple the mounting structure to an aerial vehicle, and a second component to couple a payload to the first component, the first component defining a body comprising a connection structure configured to secure the first component to the aerial vehicle, and an interface structure configured to couple with the second component.

## Description

### TECHNICAL FIELD

Aspects relate, in general, to mounting structures, and more specifically, although not exclusively, to mounting structures configured to receive a payload for a vehicle or platform.

### BACKGROUND

High-Altitude Long Endurance (HALE) unmanned aerial systems (UAS), also referred to as High Altitude Pseudo Satellites (HAPS), can comprise aerial vehicles/aircraft which operate at high altitudes for extended periods of time. Such aircraft can operate efficiently at altitudes ranging from around 9.5 to 23 km (e.g., in the tropopause). Their high-altitude deployment and minimal need for active monitoring or control make them ideal candidates for a multitude of applications such as ultra-persistent intelligence, surveillance and reconnaissance, data collection and so on. In this connection, multiple sensor devices can be provided on a HALE aircraft to collect data of interest. For example, HALE systems can usefully accommodate, e.g., communications relay payloads, optical photography sensor equipment, laser designators, radar sensors and so on.

However, due to the strict weight limitations imposed on HALE aircraft, and since it may be possible for payload devices such as those mentioned above to be in a quasi-plug-and-play form in which an off-the-shelf sensor assembly may be removably attachable to a suitably specified HALE aircraft, a diverse range of possible connection mechanisms can be implemented. Specifications relating to weight and operational parameters of a HALE aircraft can limit the number of such connection mechanisms that can sensibly be provided, thereby potentially limiting the usefulness of the aircraft when desired payloads cannot be accommodated.

### SUMMARY

According to an example, there is provided a mounting structure comprising a first component to couple the mounting structure to an aerial vehicle, and a second component to couple a payload to the first component, the first component defining a body comprising a connection structure configured to secure the first component to the aerial vehicle, and an interface structure configured to couple with the second component. The connection structure can comprise a section defining a cavity, wherein the section comprises a wall portion comprising an aperture to receive a fixing therethrough. The cavity can be in the form of (e.g., have a cross-sectional profile of) a rounded square. Other suitable profiles may be selected, such as square, triangular, hexagonal, circular and so on. The rounded portions enable a certain degree of tolerance when a component is inserted into the cavity, thereby easing insertion/removal for example.

The cavity is so profiled as to engage with a protuberance or projection of the aerial vehicle. In an alternative example, a cavity may be provided on the aerial vehicle with a protuberance to engage therewith provided on the connection structure.

The interface structure can comprise a protuberance or key structure. The protuberance can enable the first component to be keyed with the second component. The protuberance can be so profiled as to engage in a hole in the second component, whereby to align the first component and the second component together in a predetermined configuration. The interface structure can comprise a fixing bracket or flange to secure the first component and the second component together. The fixing bracket can comprise an arm depending from the first component and defining an aperture to receive a fixing therethrough, whereby to releasably secure the fixing bracket to the second component.

In an example, the second component can comprise a first set of fixing structures configured to releasably secure a payload to the second component. The second component can comprise a second set of fixing structures configured to releasably secure a fairing for the aerial vehicle to the second component. At least one of the first and second set of fixing structures can comprise at least one bayonet mount. The at least one bayonet mount can comprise a male pin or a female receptor, so configured as to engage with a corresponding pin or receptor of the payload. The at least one bayonet mount can comprise a locking pin. The second component can comprise an interface plate configured to receive the payload. The interface plate can comprise at least one of a power and data interface for connection to a payload.

According to an example, there is provided a core component for a mounting structure to secure a payload to an aerial vehicle, the core component comprising a body with fore and aft sections to connect to an interface plate configured to receive the payload, and the aerial vehicle, respectively. The aft section can comprise a connection structure configured to secure the core component to the aerial vehicle by way of a section of the core component defining a cavity, wherein the section comprises a wall portion comprising an aperture to receive a fixing therethrough. The cavity can be so profiled as to receive a mating portion of the aerial vehicle. The fore section can comprise a fixing bracket to secure the core component to an interface plate. The fixing bracket, or flange, can comprise an arm defining an aperture to receive a fixing therethrough, whereby to releasably secure the fixing bracket to the interface plate.

According to an example, there is provided an interface plate for a mounting structure to secure a payload to an aerial vehicle, the interface plate comprising a first set of fixing structures configured to releasably secure a payload. The interface plate can comprise a second set of fixing structures configured to releasably secure a fairing for the aerial vehicle to the interface plate. At least one of the first and second set of fixing structures can comprise at least one bayonet mount. The at least one bayonet mount can comprise a male pin or a female receptor, so configured as to engage with a corresponding pin or receptor of the payload.

According to an example, there is provided an aerial vehicle configured to receive a payload, the aerial vehicle comprising a chassis portion configured to receive a first component forming a core component of a mounting structure to secure the payload to the aerial vehicle, as provided herein, and a routing structure for at least one of a data and power cable, whereby to enable the least one of the data and power cable to connect to the payload via a second component of the mounting structure forming an interface plate as provided herein.

### BRIEF DESCRIPTION OF THE DRAWINGS

For a more complete understanding of the present disclosure, reference is now made, by way of example only, to the following descriptions taken in conjunction with the accompanying drawings, in which:
Figure 1 is a schematic representation of a HALE aircraft according to an example;
Figure 2 is a schematic representation of a mounting structure according to an example;
Figures 3a and 3b are schematic perspective representations of a first component of a mounting structure according to an example;
Figure 4 is a schematic representation of a second component of a mounting structure according to an example; and
Figures 5a and 5b are schematic perspective representations of a mounting structure according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

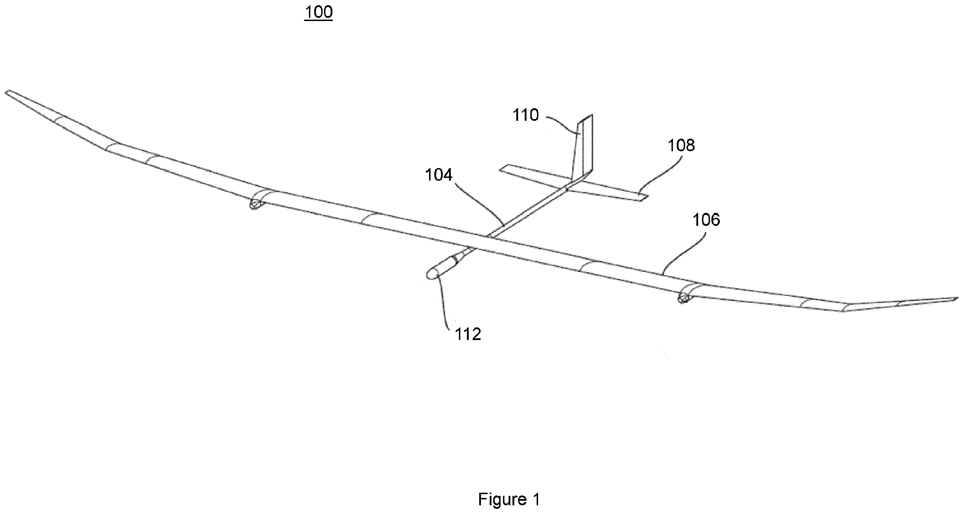

Figure 1 is a schematic representation of an aerial vehicle according to an example, in the form of a HALE aircraft. The aircraft 100, shown in perspective view, comprises a wing member 106, which has a relatively large wingspan, such as up to around 35 metres for example, and a relatively narrow chord, such as around 1 metre for example. The wing member 106 is coupled to a fuselage 104. To aerodynamically balance the vehicle 100, a horizontal tail plane 108 and a vertical tail fin (or vertical stabilizer) 110 are coupled to the rear of the fuselage 104.

In an example, a payload can be coupled to the aircraft. The payload can comprise a sensor device for example, which is configured to generate data of interest, e.g., when the aircraft is airborne. Alternatively, or in addition, a payload can comprise an effector such as, for example, a Laser Directed Energy Weapon. As noted above, the diversity of different payloads/sensors can present issues in accommodating differing requirements for structural mounting, power interfaces, data interfaces and Command and Control systems.

According to an example, there is provided a common mounting structure to enable multiple different payloads to be received by the aerial vehicle. A mounting structure according to an example may be located on the fuselage 104. For example, a mounting structure can be provided on or within the nose 112 of the aircraft 100, such as within a fairing at the nose of the aircraft. In some examples, a sensor with an aerodynamic shape can be used, thereby obviating the need for the use of a fairing, which may therefore be dispensed with in such circumstances. It is also possible that a fairing, according to an example, can comprise a radome. That is, the payload may comprise a radar system for example, and a fairing (if present) can define a radome. The radome can be transparent to a selected RF wavelength.

Alternatively, or in addition, a mounting structure can be provided on the wing member 106 (on one, other or both sides relative to the fuselage for example) and/or on the tail plane 108/vertical tail fin 110. As such, one or more mounting points can be provided for the aircraft that are configured to enable releasable mounting (or connection) of a payload to the aircraft.

An electronic support system can be provided by the aircraft 100 in order to enable power and/or data transfer to/from a payload using, e.g., data and power cables that can be attached to the payload in question. That is, certain functions and requirements of a payload can be provided by an electronic support system of the aircraft. Such an electronic support system, or part thereof (such as cabling for example) can be provided in or via the mounting structure so as to enabling easy payload mounting. In some examples, a payload may comprise a sensor that does not require an electronic support structure.

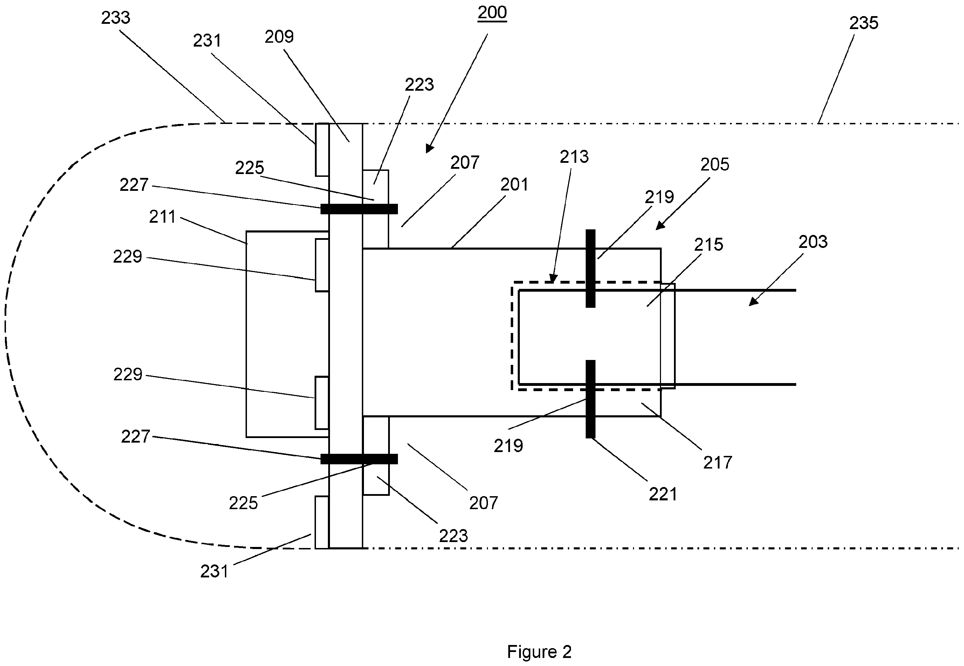

Figure 2 is a schematic representation of a mounting structure according to an example. The example of figure 2 shows a mounting structure in situ on an aerial vehicle with a payload attached. The mounting structure 200 comprises a first component 201 to couple the mounting structure 200 to an aerial vehicle 203 (only part of which is depicted in figure 2). As described above, the mounting structure may be provided on or within any one or more of the locations of the aerial vehicle noted above, such as the nose, wings and so on. The first component comprises a connection structure 205 configured to secure the first component 201 to the aerial vehicle 203. An interface structure 207 of the first component 201 is configured to couple with a second component 209 of the mounting structure. Accordingly, in an example, the mounting structure 200 comprises the first and second components. The second component 209 is used to couple a payload 211 to the first component 201 and thus by extension to the aerial vehicle 203.

In an example, the connection structure 205 comprises a section of the first component 201 defining a cavity 213, which may be in the form of a rounded square (or diamond) for example, although it will be appreciated that the cavity may be any suitable shape or profile. The cavity 213 is so profiled as to engage with a protuberance or projection 215 of the aerial vehicle 203. Again, the protuberance can be any suitable shape or profile. It is also possible that the aerial vehicle can present a cavity that is so profiled as to engage with a protuberance or projection of the first component for example.

In an example, the section of the first component 201 comprises a wall portion 217 comprising an aperture 219 to receive a fixing or fixings 221 therethrough. In the example of figure 2, two such fixings are depicted. However, a single fixing that goes through apertures in both sides of the cavity 213 may be used (e.g., fixing 221 may simply go straight through both of the apertures 219). As figure 2 is a cross-sectional view, it will be appreciated that corresponding apertures/fixings and so on may be provided in other regions of the mounting structure which are otherwise not visible in this representation. For example, wall portion 217 may comprise additional apertures to receive fixings that can be arranged orthogonally to those depicted.

The interface structure 207 of the first component 201 can comprise a fixing bracket or flange 223 to secure the first component 201 and the second component 209 together. In an example, the fixing bracket 223 comprises at least one arm depending from the first component 201 and defining an aperture or channel 225 to receive a fixing 227 therethrough, whereby to releasably secure the fixing bracket 223 to the second component 209, which has a corresponding aperture through which the fixing can pass. Accordingly, the second component 209 of the mounting structure 200 can be secured to the first component 201 using one or more fixings, e.g., bolts and so on, that can pass through an aperture in an arm that make up the fixing bracket 223 of the first component 201. Thus, the first component 201 can be releasably secured to the protuberance 215 by way of one or more fixings, and the second component 209 can be releasably secured to the first component 201 by way of one or more fixings.

According to an example, the second component 209 can comprise a first set of fixing structures 229 configured to releasably secure the payload 211. A second set of fixing structures 231 can be provided in order to releasably secure a fairing 233 for the aerial vehicle to the second component 209. In an example, fairing 233 is positioned in front of the second component 209, as depicted in figure 2, such that it faces a direction of travel of the aerial vehicle. Another fairing 235 may be position behind the second component 209. In an example, at least one of the first and second set of fixing structures 229, 231 comprises at least one bayonet mount. The at least one bayonet mount can comprise a male pin or a female receptor, so configured as to engage with a corresponding pin or receptor of the payload or fairing, as appropriate, and at least one locking pin can be provided in order to secure the payload (and/or fairing) to its corresponding bayonet fitting to prevent the payload (and/or fairing) working loose (e.g., as a result of vibrations).

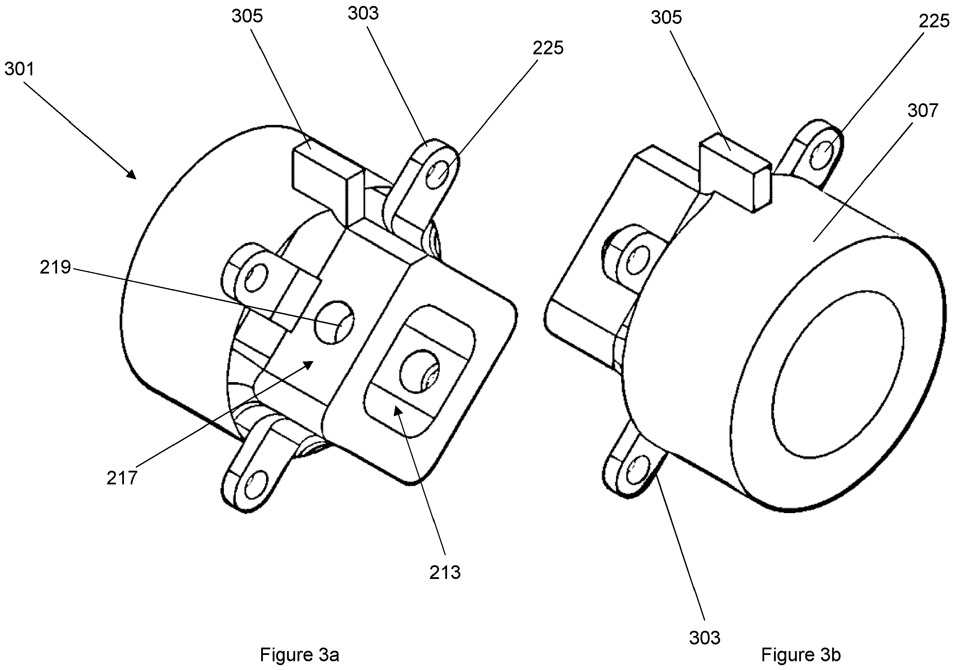

Figures 3a and 3b are schematic perspective representations of a first component of a mounting structure according to an example. Figure 3a shows the connection structure 207 in more detail, whilst both figures 3a and 3b show the interface structure in more detail. Referring to figure 3a, the first component, defining a body 301 forming a core component of the mounting structure 200 comprises an arm 303, which forms part of the fixing bracket 223 forming the interface structure 207 of the mounting structure. In the example of figure 3, fixing bracket 223 comprises four arms 303 arranged equally around the body 301 at angular spacings of 90 degrees from one another. It will be appreciated that fewer (or more) arms may be provided and that the relative positioning of the arms from one another may depart from that shown or described. Arms 303 comprise apertures 225 through which a fixing 227 may pass in order to secure the second component 209.

As can be seen best from figure 3a for example, a section of the first component forming the connection structure 205 defines a cavity 213. As noted above, the section may be in the form of a rounded square for example in which, as shown, at least some of the corners are rounded. In the example of figure 3, the first component is oriented such that the connection structure 205 is diamond shaped with a protuberance 305 provided on the first component adjacent one of the corners of the connection structure (this corner may not be rounded, as is depicted in figure 3a in order to, e.g., simplify manufacture). However, it will be appreciated that the connection structure may take many different forms, as well as the cavity 213 having many different possible shapes and sizes, and that the protuberance 305 may be positioned at any point around the periphery of the first component.

With reference to figure 3a, aperture 219 is provided in a wall portion 217 of the connection structure. Another such aperture is provided in the wall portion on the opposite side the connection structure. As such, a single fixing may pass through both apertures, or multiple fixings (e.g., one for each aperture) may be used. It will be appreciated that some apertures in the walls of the connection structure are obscured in the example of figure 3. Also, it should be noted that although the connection structure of figure 3 is described as having four apertures (one in each wall of the diamond shaped section), more or less may be provided. For example, a wall may have no or multiple apertures configured to receive fixings.

As noted above, the cavity 213 is so profiled as to engage with a protuberance or projection 215 of the aerial vehicle 203. Correspondingly positioned apertures in the protuberance or projection 215 of the aerial vehicle 203 can be used to receive fixings that pass through the apertures 219, thereby enabling the first component to be fixedly mounted to the aerial vehicle.

The protuberance 305 is so profiled as to engage in a hole in the second component 209, whereby to align the first component 201 and the second component 209 together in a predetermined configuration. As such, it will be appreciated that apertures in the second component can be provided at selected positions such that, when the second component is engaged with the protuberance of the first component, the apertures in the arms of the connection structure line up with those of the second component enabling the first and second components to be fixed together using fixings such as bolts for example.

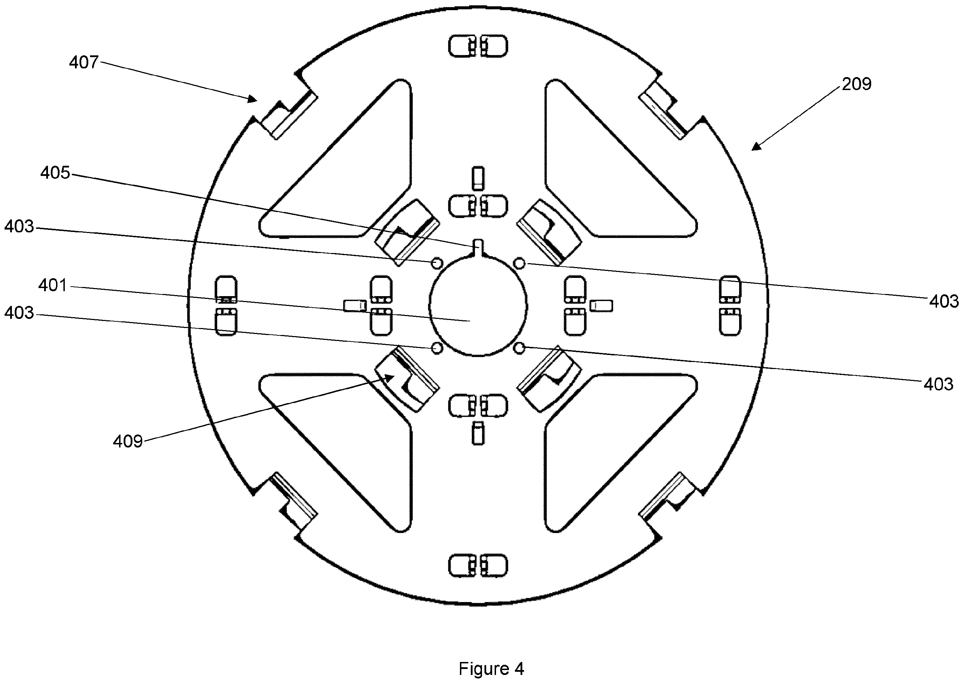

The core component, defined by body 301, thus comprises fore and aft sections (in the sense of, e.g., the intended direction of travel of the aerial vehicle) to connect to an interface plate configured to receive a payload, and the aerial vehicle, respectively. In an example, the fore section is interface structure, and the aft section is the connection structure. In an example, a cavity 213 can connect to an intermediate component, which intermediate component can slot into or otherwise be fixed to the aerial vehicle. That is, a direct connection of the body 301 to an aerial vehicle (such as the chassis thereof for example) can be provided, or body 301 can be connected to a further component that itself is connected to the chassis of the aerial vehicle. Figure 4 is a schematic representation of a second component of a mounting structure according to an example. The second component 209 forms an interface plate to enable a payload 211 to be coupled to an aerial vehicle. A central aperture, hole or cut-out 401 is so sized and shaped as to receive circular part 307 of the first component (see figure 3b). Cut-out 405 is so sized and shaped as to receive protuberance 305 of the first component, and, in the example of figure 4, multiple apertures 403 are provided. As described above, the apertures 403 are positioned such that, when protuberance 305 is aligned with cut-out 405 such that the circular part 307 of the first component can pass into cut-out 401, they are in aligned with apertures 225 of arms 303, thereby enabling fixings to pass through both sets of apertures in order to secure the first and second components together. The second component is therefore keyed to the first component. It will be appreciated that the position and shape and so on of the cut-out 405 and/or apertures 403 and/or cut-out 401 can be selected as desired, subject to corresponding adjustments in the size, relative position, shape and so on of the protuberance and apertures of the interface structure.

According to an example, second component 209 comprises a first set of fixing structures 229 configured to releasably secure a payload 211 to the second component. A second set of fixing structures 231 can also be provided on the second component to releasably secure a fairing 233 for the aerial vehicle to the second component 209. In the example of figure 4, the first and second fixing structures take the form of innermost 409 and outermost 407 bayonet rings or mounts. Referring to the example of figure 4, the first set of fixing structures 409, of which there are four in this example equally spaced around the aperture 401 as depicted, form a first set of bayonet mounts. Similarly, the second set of fixing structures 407, of which there are four in this example spaced circumferentially around the outer edge of the second component, for a second set of bayonet mounts. That is, the interface plate has two sets of bayonet rings, an inner ring 409 with a diameter slightly wider than that of the core component, and an outer ring 407 with a diameter generally equal to the size of the interface plate. The outer ring 407 is the structural mounting for the fairing 233, allowing it to be easily twisted on and off. The inner ring 409 holds a payload/sensor onto the interface plate and thus the structural core component. In an example, both sets bayonet rings can have locking pins to ensure that the fairing/payload etc. attached thereto does not come loose in the presence of, e.g., low level vibrations.

The first and second sets of fixing structures thus provide mechanical interfaces for the mounting structure enabling interchangeable coupling of payloads and fairings etc. to an aerial vehicle equipped with the mounting structure described herein. According to an example, the first and second sets of fixing structures can comprise, e.g., tabs or pins which are configured to fit into appropriately sized recesses or receptors in a payload/fairing. The tabs can be keyed to ensure that the item being connected, be that a payload or fairing, can be inserted in one orientation. For example, one tab may be a different size to others in a set. Once inserted, the payload/fairing can be fastened by turning it, as normal with bayonet type mounts. The item in question can be locked in place using a pin, such as a by a spring-loaded pin for example, which can be operated to remove the item, and which also prevents it from working its way loose as the aerial vehicle is in operation.

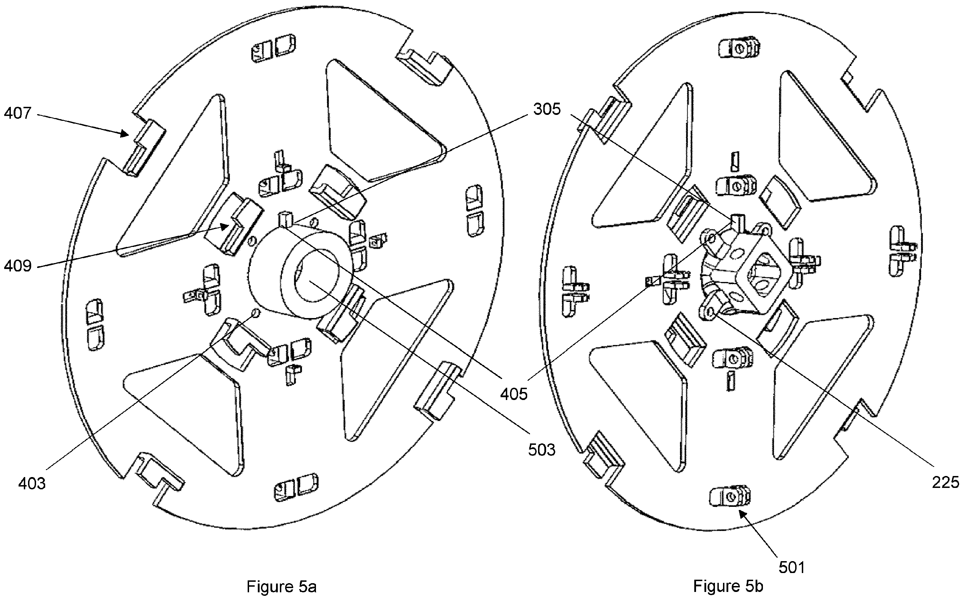

Figures 5a and 5b are schematic perspective representations of a mounting structure according to an example. Figure 5a shows the mounting structure from a side thereof configured to receive a payload (broadly speaking showing the fore section of the first component), and figure 5b shows the mounting structure from a side thereof configured to connect to the aerial vehicle (broadly speaking showing the aft section of the first component). The first and second fixing structures are more clearly visible in figure 5a, each of which, in the example of figure 5 comprises four bayonet mounts.

As can be seen from figures 5a and 5b, protuberance 305 is provided within the cut-out 405, and the circular part 307 of the first component is provided in cut-out 401. Accordingly, apertures 403 are aligned with apertures 225 of arms 303, thereby enabling fixings to pass through both sets of apertures in order to secure the first and second components together. Other flanges or fixing tabs 501 may be provided around the interface plate in order to enable it to be connected to other parts of an aerial vehicle, such as additional fairings or structural components and so on. In an example, a channel, hole or aperture 503 passes through the first component, thereby enabling a conduit for the passage of, e.g., power and/or data cabling for a payload. The hole 503 can thus, in effect, form a power and data interface for connection to a payload.

According to an example, a mounting structure as described herein may thus be provided on an aerial vehicle such as that depicted in and with reference to figure 1, whereby to enable a payload to be removably mounted to the aerial vehicle. The structural core component (the first component) has a predetermined shape on one side to enable fastening to a platform, such as an aerial vehicle, and on the other side has a broadly generic circular shape. Flanges and pins on the core can be used to fasten the interface plate. The core, forming the first component, can therefore be used to transfer a structural load, which arises from gravity acting on a payload/sensor, through to the main platform. In an example, the first component can be manufactured from a high-strength material such as titanium, and advanced manufacturing techniques such as laser sintering or additive manufacturing could be applied to enable small-scale design features to be manufactured within required tolerances.

According to an example, the second component of the mounting structure, forming the interface plate can slot over the circular part of the structural core, with a keyed notch to align the interface plate correctly and, e.g., four flanges on the structural core so that the two parts can be bolted together. The interface plate can comprise two bayonet rings - an inner ring with a diameter slightly wider than the structural core, and an outer ring with a diameter roughly equal to the size of the plate. The outer ring provides a structural mounting for a, e.g., fairing, allowing it to be easily twisted on and off. The inner ring can hold the payload/sensor onto the structural core.

In an example, the second component can be manufactured from a low-density material such as aluminium. That is, since the interface plate does not have a core structural role, it will still transmit torsional loads between the payload/sensor and the rest of the platform. The plate could be manufactured using stamping and folding of metal.

In an example, the interface plate can comprise power and data interfaces for connecting the payload/sensor to a platform power distribution system, command and control network and data network. For example, a sensor/payload can be presented with a number of power interfaces for connection to a platform power distribution system (for example, connection to a 5V rail, 12V rail, 28V rail and a 52V rail as these are the most common voltage specifications). Likewise, for command and control and data networks, a sensor/payload can be presented with, e.g., industry-standard interfaces (such as Ethernet, USB and/or serial RS485). These interfaces could all be wired into a common D25 way connector or equivalent to reduce the number of physical interfaces present on the interface plate, thereby enabling a commensurate reduction in the mass of the second component.

## Claims

1. A mounting structure comprising:
a first component to couple the mounting structure to an aerial vehicle; and
a second component to couple a payload to the first component;
the first component defining a body comprising:
a connection structure configured to secure the first component to the aerial vehicle, and
an interface structure configured to couple with the second component.

2. The mounting structure as claimed in claim 1, wherein the connection structure comprises a section defining a cavity, wherein the section comprises a wall portion comprising an aperture to receive a fixing therethrough.

3. The mounting structure as claimed in claim 2, wherein the cavity is so profiled as to engage with a protuberance or projection of the aerial vehicle.

4. The mounting structure as claimed in any preceding claim, wherein the interface structure comprises a protuberance being so profiled as to engage in a hole in the second component, whereby to align the first component and the second component together in a predetermined configuration.

5. The mounting structure as claimed in any preceding claim, wherein the second component comprises a first set of fixing structures configured to releasably secure a payload to the second component.

6. The mounting structure as claimed in any preceding claim, wherein the second component comprises a second set of fixing structures configured to releasably secure a fairing for the aerial vehicle to the second component.

7. The mounting structure as claimed in claim 5 or 6, wherein at least one of the first and second set of fixing structures comprises at least one bayonet mount.

8. The mounting structure as claimed in any preceding claim, wherein the second component comprises an interface plate configured to receive the payload.

9. A core component for a mounting structure to secure a payload to an aerial vehicle, the core component comprising a body with fore and aft sections to connect to an interface plate configured to receive the payload, and the aerial vehicle, respectively.

10. The core component as claimed in claim 9, wherein aft section comprises a connection structure configured to secure the core component to the aerial vehicle by way of a section of the core component defining a cavity, wherein the section comprises a wall portion comprising an aperture to receive a fixing therethrough.

11. The core component as claimed in claim 10, wherein the cavity is so profiled as to receive a mating portion of the aerial vehicle.

12. An interface plate for a mounting structure to secure a payload to an aerial vehicle, the interface plate comprising a first set of fixing structures configured to releasably secure a payload.

13. The interface plate as claimed in claim 12, the interface plate comprising a second set of fixing structures configured to releasably secure a fairing for the aerial vehicle to the interface plate.

14. The interface plate as claimed in claim 12 or 13, wherein at least one of the first and second set of fixing structures comprises at least one bayonet mount.

15. The interface plate as claimed in claim 14, wherein the at least one bayonet mount comprises a male pin or a female receptor, so configured as to engage with a corresponding pin or receptor of the payload.
